# EUROPEAN PATENT SPECIFICATION

(11) **EP 0 460 219 B1**
(45) Date of publication and mention of the grant of the patent: **02.11.1995**
(21) Application number: 91900319.4
(22) Date of filing: 17.12.1990
(51) Int. Cl.: A23J 1/06, A23J 3/12, A23L 1/305, A23L 1/312

(54) **PROCESSED HEMOGLOBIN AND PRODUCTION THEREOF**
BEHANDELTES HÄMOGLOBIN UND DESSEN HERSTELLUNG
HEMOGLOBINE TRAITEE ET PROCEDE DE PRODUCTION ASSOCIE

(30) Priority: 27.12.1989 JP 342124/89
(43) Date of publication of application: 11.12.1991
(73) Proprietor: OGAWA & CO., LTD., Osaka-shi Osaka-fu, 541 (JP)
(72) Inventor: IZUMI, Kenjiro 2-6-42, Suimeidai, Hyogo 666 (JP); NONAKA, Takehiko 2127-14, Kawanabe, Okayama 708 (JP); HAYASHI, Jun 22-7, Minamiaobadai, Osaka 586 (JP)
(74) Representative: VOSSIUS & PARTNER
(86) International application number: JP9001642
(87) International publication number: WO9109534

(56) References cited:
- JP-A- 1 213 300
- JP-A- 6 344 599
- JP-B- 6 015 297
- WPI/DERWENT, accession no. 71-71383S [45], Derwent Publications Ltd, London,GB; & SU-A-289 804 (UKRAINIAN MEAT AND MILK I)

## Description

The present invention relates to novel deodorized, decolorized and water-soluble processed hemoglobin having excellent iron-absorption property which is useful for a raw material of food, and a process for producing the same.

Utilization of blood of animals bled upon slaughter and the like is quite limited and almost all blood is disposed. Further, there are various problems regarding the disposal. On the other hand, hemoglobin which constitutes red blood cells is a protein having good quality and, further, it contains iron as a hemoferrum protein and is extremely valuable as a raw material of food. However, utilization thereof as a raw material of food have also been heretofore limited because of its odor, color and the like.

Then, from the viewpoints of utilization of unutilized resources as well as utilization of the excellent value of hemoglobin as a raw material of food, various attempts have been made to deodorize and decolorize blood of animals and its components so that they can serve as food to obtain processed hemoglobin, and to use the resulting processed hemoglobin as a raw material of food. However, satisfactory processed hemoglobin has not yet been found.

For example, it is known that insoluble hemoglobin obtained by heating blood to cause heat coagulation of a blood protein, followed by decolorizing with hydrogen peroxide and then catalase treatment is utilized for a part of livestock products ["Proc. 25th Europe. Meeting Meat Research Workers", Budapest, Paper 10.7 (1979)]. However, this hemoglobin is water-insoluble due to denaturation of the protein and, therefore, its use is limited to a product wherein any dissolution is not required such as livestock products.

Further, a pharmaceutical preparation wherein a residual heme structural part obtained by enzymatically degrading animal blood hemoglobin to convert the protein of the globin part into peptides and amino acids is concentrated and powdered has been marketed. However, apart from medical use, since this preparation has an iron rust-like taste and black color, it is not suitable for intake as food.

Further, JP-A 64-60397, 1-24137 and 1-34204 also disclose methods comprising separating hemoglobin from blood, degrading the protein with a protease and then concentrating the heme part. However, the products obtained are not suitable for raw materials of food in view of color and taste, either.

WPI/Derwent accession no. 71-71383 S (SU-A 289 804) discloses a process for the preparation of a soluble blood product which process is rendered more effective by a preliminary partial hydrolysis, e.g. an alkaline hydrolysis with NaOH.

GB-A 1562 618 discloses a process for making a food product from blood whereby the blood is decolorized by treatment with excess oxidizing agent resulting in a coagulum.

Under these circumstances, in order to obtain processed hemoglobin which is suitable for a raw material of food, the present inventors have studied intensively. As a result, it has been found that deodorized, decolorized and water-soluble processed hemoglobin, which is different from a conventional one and is extremely superior in absorption of iron in vivo in comparison with the conventional hemoglobin and processed hemoglobin, can be obtained by deodorizing raw hemoglobin and then treating it with hydrogen peroxide under specific alkaline conditions. Thus, the present invention has been completed.

The present invention provides processed hemoglobin having the following features: it is
(a) deodorized;
(b) decolorized;
(c) water-soluble; and
(d) obtainable by a procedure comprising the following steps:
   (da) washing the hemoglobin with water;
   (db) dispersing and dissolving the product of step (da) in water under alkaline conditions having a pH value equal to or higher than 9; and
   (dc) treating the product of step (db) with hydrogen peroxide under heating;
   wherein the product of step (dc) comprises an iron content not less than 2 mg per g of solid content as measured by o-phenanthroline absorptiometry and wherein the pH value of an aqueous solution of said product of step (dc) having a solid content of 0.5 % by weight is 6.8 to 8.2.

The present invention also provides a process for producing processed hemoglobin comprising the following steps:
(a) washing raw hemoglobin with water;
(b) subjecting the product of step (a) to solid liquid-separation;
(c) dispersing and dissolving the solids resulting from step (b) in water under alkaline conditions having a pH value equal to or higher than 9; and
(d) treating the product of step (c) with hydrogen peroxide under heating.

Examples of the raw hemoglobin to be used include those obtained by collecting blood from animals, typically, bovine, swine, etc., preferably, under aseptic conditions so as to improve edible property, centrifuging it to separate and precipitate hemoglobin according to a conventional method, or further drying and powdering them with a spray dryer, drum dryer and the like. Particularly, since powdered hemoglobin is readily and commercially available, it is preferred to use such a hemoglobin powder in the present invention.

In general, a raw hemoglobin powder is a granular material whose erythrocyte membrane is remained. Although it can be dispersed in water, its solubility in water is inferior. Such a hemoglobin powder contains blood components other than hemoglobin, mainly, water-soluble blood components and has an odor which is not suitable for intake. Thus, in the present invention, soluble components is removed by washing with water to conduct first stage deodorization. Usually, this washing is conducted by dipping the raw hemoglobin in water with stirring, preferably, with adjusting pH to 6.8 to 7.0 which is the isoelectric point of hemoglobin.

This pH adjustment at this washing step and each subsequent step described hereinafter can be conducted with agents suitable for food such as a mineral acid, for example, hydrochloric acid, sulfuric acid, phosphoric acid or the like, an organic acid, for example, citric acid, malic acid, lactic acid, tartaric acid or the like and an alkali such as potassium hydroxide, sodium hydroxide, or the like.

Then, solid-liquid separation is conducted by centrifugation, filter press or the like and the resulting separated solid is dispersed and dissolved in water under alkaline conditions of not lower than pH 9, preferably, not lower than pH 10, more preferably, pH 10.26 or higher. It has been found that, by this alkali treatment, the erythrocyte membrane of the hemoglobin powder is readily broken which results in extreme increase in water solubility of hemoglobin and, at the same time, a solution having no heat coagulation property can be obtained. Further, it has been found that this dissolution is scarcely taken place when pH is lower than 9.

In the present invention, the decolorization treatment is conducted with hydrogen peroxide in this solution state. In general, decolorization is conducted by maintaining the hemoglobin at a hydrogen peroxide concentration of 0.2 to 10 W/W % with heating at not lower than 30°C, preferably 60 to 99°C, for 30 minutes to 3 hours. Thereby, an aqueous solution of deodorized and decolorized hemoglobin solution is obtained.

After cooling, the solution was optionally subjected to catalase treatment to remove the residual hydrogen peroxide completely and then heated to not lower than about 80°C to inactivate catalase. Before and/or after catalase treatment, hemoglobin may be further purified by repeating isoelectric precipitation at pH 3.5 to 6.8, solid-liquid separation, washing and alkali dissolution.

Then, pH of the aqueous solution having solid content of 0.5 W/W % is adjusted so that pH becomes 6.8 to 8.2.

Hemoglobin in the solution thus obtained is water-soluble and its iron content measured by o-phenanthroline absorptiometry which is the determination method provided by Japanese Standard of Food Components is not less than 2.0 mg per 1 g of solid content, which is equal to or higher than that of the raw hemoglobin. Further, the processed hemoglobin of the present invention is characterized in that, in the amino acid composition of the hydrolyzate with hydrochloric acid, tyrosine is not more than 50%, typically, 20 to 0% in comparison with tyrosine in the raw hemoglobin.

The deodorized and decolorized hemoglobin solution thus obtained can be subjected to a suitable known preservation treatment such as sterilization or the like and the resulting solution itself can be used as the processed hemoglobin of the present invention. Optionally, it can be further treated to obtain a concentrated solution or dried powder according to a conventional method, and they can be also used as the processed hemoglobin of the present invention.

Further, it has been found that, when the concentration of solids of the hemoglobin solution exceeds about 6 W/W %, hemoglobin becomes a swelled state which results in extreme increase of its viscosity and, therefore, it is difficult to increase the concentration of hemoglobin positively upon alkali dissolution in the above purification. On the other hand, it has been found that, when the solution is once frozen and then dissolved with heating again with maintaining predetermined pH, its viscosity is decreased and the hemoglobin concentration of the solution can be increased by further addition of hemoglobin precipitated isoelectrically thereto. Thereby, it becomes possible to obtain the hemoglobin solution having a concentration of about 10 to 25 W/W %. In this case, it has also been found that its dissolution and degradation properties can be effectively improved by addition of saccharides such as sugar, starch syrup, maltose and the like to the solution in the amount of 10 to 20 W/W %. Further, it has been found that, when a skimmed milk or whole milk powder is added to the hemoglobin solution in the amount of 10 to 100 W/W % based on hemoglobin upon drying and powdering and the mixture was dried with a spray drier, excellent powdered processed hemoglobin can be obtained.

These concentrated solution and dried powder are also included in the scope of the processed hemoglobin of the present invention.

The processed hemoglobin of the present invention is sufficiently deodorized and decolorized and has excellent water solubility. Therefore, the processed hemoglobin can be used as a raw material of various food and, according to a conventional method, the processed hemoglobin can be used for improving taste and flavor as well as supply of iron and protein by formulating it into various food, for example, livestock products, bread, noodle, dumpling, spaghetti, sausage, fish paste products, yogurt and the like.

### Examples

The following Examples further illustrate the present invention in detail but are not to be construed to limit the scope thereof.

### Example 1

A commercially available bovine blood powder (10.5 kg) collected under aseptic conditions was dispersed in tap water (31.5 kg) adjusted to pH 6.8 to 7.0 with stirring and then centrifuged at 3500 G. The resulting solid was separated and this washing operation was further repeated twice to obtain deodorised water-containing hemoglobin (15 kg).

This was mixed with an alkali solution (pH: 12.77) composed of tap water (200 kg) and 4% aqueous solution of sodium hydroxide (12.6 kg), followed by heating at 60°C for 30 minutes. Then, the mixture was heated to 85 to 90°C and about 5 kg portions of 10% hydrogen peroxide solution were added at 3 minute intervals (total: 25.2 kg) to conduct decolorization for 2 hours.

After cooling to 30 to 35°C, catalase No. C-10 (manufactured by Sigma Co., 0.00042 kg) was added to the mixture which was allowed to stand for 1.5 hours with stirring gently. Catalase was inactivated by heating to 80°C, followed by cooling to 40°C to obtain an aqueous solution of deodorised and decolorised hemoglobin (257 kg).

To the resulting aqueous hemoglobin solution was added 10% aqueous malic acid to adjust to pH 4.0 to 4.3, stirring gently for 30 minutes to precipitate hemoglobin and further centrifuged at 3500 G. The separated solid was further dispersed in tap water (90 kg). After repeating centrifugation and dispersion in tap water three times, a 0.8% aqueous sodium hydroxide solution (60 kg) was added, followed by adjusting to pH 7.5 to 7.7 and further stirring at 45 to 50°C to dissolve hemoglobin.

After passing through a strainer of 100 mesh, the solution was heated at 90°C for 30 seconds to sterilize it to obtain water-soluble processed hemoglobin (250 kg) as viscous dark brown liquid.

### Example 2

The liquid processed hemoglobin obtained in Example 1 was spray-dried at an air blast temperature of 140 to 160°C and an exhaust temperature of 70 to 90°C to obtain water-soluble processed hemoglobin as light brown powder (8.7 kg).

### Example 3

According to the same manner as that described in Example 1, deodorization was conducted, followed by treatment with a hydrogen peroxide solution and cooling at 30 to 35°C. To this hemoglobin (257 kg) was added catalase No. C-10 (manufactured by Sigma Co.; 0.00042 kg) and the mixture was allowed to stand for 1.5 hours. Then, pH was adjusted to 4.0 to 4.3 by adding 10% aqueous malic acid solution, followed by stirring gently for 30 minutes to precipitate hemoglobin. After centrifugation at 3500 G, the resulting hemoglobin was dispersed in tap water (90 kg). After repeating centrifugation and dispersion in tap water three times, the hemoglobin dispersion was heated to 80°C to inactivate catalase.

Then, the solution was cooled to 50°C and adjusted to pH 7.5 to 7.7 with 0.8% sodium hydroxide and then stirred at 45 to 50°C. After passing through a strainer of 100 mesh, the solution was heated at 90°C for 30 minutes to sterilize it to obtain decolorized and deodorized water-soluble processed hemoglobin (250 kg) as viscous dark brown liquid.

### Example 4

Liquid processed hemoglobin obtained in Example 3 was spray-dried according to the same manner as that described in Example 2 to obtain water-soluble processed hemoglobin (8.7 kg) as light brown powder.

### Example 5

According to the same manner as that described in Example 3, deodorization was conducted, followed by decolorization with a hydrogen peroxide solution, catalase treatment and washing. Then, catalase was inactivated and the resulting hemoglobin dispersion (257 kg) was centrifuged at 3500 G. The separated solid was frozen at -18°C to obtain water-soluble processed hemoglobin (15 kg) as a frozen dark brown block

This was stored with freezing at -18°C.

Upon use, the processed hemoglobin is appropriately thawed, followed by dispersing it in water in a concentration of 10 to 20 W/W %, adjusting to pH 7.0 to 7.7 with an alkali, for example, sodium hydroxide or potassium hydroxide to dissolve it.

### Example 6

A solution of decolorized and deodorized hemoglobin obtained according to the same manner as that described in Example 1 dissolved in an alkali (pH: 7.5 to 7.7, 150 kg) was frozen at -18°C. Then, it was thawed with heating to 45°C. To the thawed solution was added a centrifuged solid (15 kg) obtained according to the same manner as that described in Example 1 before alkali dissolution, followed by pH adjustment to dissolve the mixture again.

This solution was frozen as described above. After repeating thawing and addition of centrifuged solid (15 kg) and re-dissolution once, the solution was passed through a strainer of 100 mesh and heated at 90°C for 30 seconds to sterilize it to obtain to obtain water-soluble processed hemoglobin (171.5 kg) as viscous dark brown liquid.

This liquid processed hemoglobin was spray-dried as described above to obtain water-soluble hemoglobin (27.0 kg) as dark brown powder.

### Example 7

To a hemoglobin solution (172 kg) obtained by repeating freezing, thawing, addition of centrifuged solid and re-dissolution according to the same manner as that described in Example 6 was added a sugar (10 W/W %), and the mixture was passed through a strainer as described above and then sterilized with heating to obtain water-soluble processed hemoglobin (191.5 kg) as viscous dark brown liquid.

### Example 8

To a hemoglobin solution (172 kg) obtained by repeating freezing, thawing, addition of centrifuged solid and re-dissolution according to the same manner as that described in Example 6 was added a skimmed milk powder (26 kg, the same amount as that of solid content in the solution), and the mixture was passed through a strainer as described above, followed by sterilization with heating and further spray-drying to obtain water-soluble processed hemoglobin (52 kg) as yellow powder.

When the iron content of the blood powder used as the raw material was measured by o-phenanthroline absorptiometry, it was 2.8 mg/g. On the other hand, when the iron content of the processed hemoglobin powder in Example 2 was measured according to the same manner as described above, it was 3.2 mg/g. It was found that, in the processed hemoglobin of the present invention, the iron content was increased in comparison with the raw blood material.

Further, the hydrolyzate of the raw blood powder with hydrochloric acid and the processed, hemoglobin of Example 2 were subjected to amino acid analysis (using Hitachi 835 Amino Acid Analyser). The following results were obtained (mg/100 g).

| Amino acid | Raw blood | Processed hemoglobin of the present invention |
|---|---|---|
| Aspartic acid | 6557.4 | 8036.0 |
| Threonine | 1160.8 | 1274.1 |
| Serine | 2396.6 | 2765.1 |
| Glutamic acid | 3382.6 | 4227.5 |
| Glycine | 2653.3 | 3041.3 |
| Alanine | 4757.2 | 5388.4 |
| Valine | 3283.7 | 2659.3 |
| Methionine | 813.2 | 186.2 |
| Leucine | 4769.2 | 5704.8 |
| Tyrosine | 631.4 | 152.4 |
| Phenylalanine | 5386.6 | 5186.2 |
| Histidine | 3385.6 | 3640.2 |
| Lysine | 1569.4 | 2335.4 |
| Arginine | 1699.3 | 1105.8 |
| Proline | 1752.2 | 2100.5 |

As seen from the above results, in the processed hemoglobin of the present invention, tyrosine in the amino acid composition is extremely decreased in comparison with the raw blood powder. In addition, when iron absorption test was conducted in anemia rats, the iron absorption of the processed hemoglobin of Example 2 was about 1.9 to 3.5 times higher than that of the raw hemoglobin.

As described above, according to the present invention, by utilizing unutilized resources almost all of which have been disposed heretofore, deodorized, decolorized and water-soluble processed hemoglobin having extremely excellent iron-absorption property which is suitable for a raw material of food can be obtained.

## Claims

1. Processed hemoglobin having the following features: it is
(a) deodorized;
(b) decolorized;
(c) water-soluble; and
(d) obtainable by a procedure comprising the following steps:
(da) washing the hemoglobin with water;
(db) dispersing and dissolving the product of step (da) in water under alkaline conditions having a pH value equal to or higher than 9; and
(dc) treating the product of step (db) with hydrogen peroxide under heating;
wherein the product of step (dc) comprises an iron content not less than 2 mg per g of solid content as measured by o-phenanthroline absorptiometry and wherein the pH value of an aqueous solution of said product of step (dc) having a solid content of 0.5 % by weight is 6.8 to 8.2.

2. Processed hemoglobin according to claim 1 which is in the form of a powder.

3. Processed hemoglobin according to claim 2 which contains a skimmed milk or whole milk powder in an amount of 10 to 100 W/W % based on hemoglobin protein.

4. Processed hemoglobin according to claim 1 which is in the form of a liquid having 10 to 25 W/W % of protein content.

5. Processed hemoglobin according to claim 4 which contains 10 to 20 W/W % of a saccharide.

6. A process for the production of processed hemoglobin according to claim 1 comprising the following steps:
(a) washing raw hemoglobin with water;
(b) subjecting the product of step (a) to solid liquid-separation;
(c) dispersing and dissolving the solids resulting from step (b) in water under alkaline conditions having a pH value equal to or higher than 9; and
(d) treating the product of step (c) with hydrogen peroxide under heating.

7. The process according to claim 6, additionally comprising
(ec) treating the product of step (d) with catalase.

8. The process according to claim 6, additionally comprising
(ea) isoelectrically precipitating the product of step (d)
(eb) recovering and washing the product of step (ea); and
(ec) treating the product of step (eb) with catalase.

9. The process according to claim 7 or 8 additionally comprising the steps of
(f) inactivating the catalase enzyme; and optionally
(g) conducting isoelectric precipitation for purifying the hemoglobin and then drying the hemoglobin.

## Patentansprüche

1. Behandeltes Hämoglobin mit den folgenden Eigenschaften: es ist
(a) geruchlos gemacht;
(b) entfärbt;
(c) wasserlöslich und
(d) durch ein Verfahren erhältlich, das die folgenden Schritte umfaßt:
(da) Waschen des Hämoglobins mit Wasser;
(db) Dispergieren und Lösen des Produkts des Schritts (da) in Wasser unter alkalischen Bedingungen, die einen pH-Wert gleich oder höher als 9 aufweisen und
(dc) Behandeln des Produkts des Schritts (db) mit Wasserstoffperoxid unter Erwärmen;
wobei das Produkt des Schritts (dc) einen Eisengehalt umfaßt, der nicht geringer als 2 mg pro g Feststoffgehalt ist, was durch o-Phenanthrolin-Absorptiometrie gemessen wird, und wobei der pH-Wert einer wäßrigen Lösung dieses Produkts des Schritts (dc) mit einem Feststoffgehalt von 0,5 Gew.-% 6,8 bis 8,2 ist.

2. Behandeltes Hämoglobin nach Anspruch 1, das in Form eines Pulvers vorliegt.

3. Behandeltes Hämoglobin nach Anspruch 2, das ein Magermilch- oder Vollmilchpulver in einer Menge von 10 bis 100 Gew./Gew.-% bezogen auf Hämoglobinprotein enthält.

4. Behandeltes Hämoglobin nach Anspruch 1, das in Form einer Flüssigkeit mit 10 bis 25 Gew./Gew.-% Proteingehalt vorliegt.

5. Behandeltes Hämoglobin nach Anspruch 4, das 10 bis 20 Gew./Gew.-% Saccharid enthält.

6. Verfahren zur Herstellung von behandeltem Hämoglobin nach Anspruch 1, das die folgenden Schritte umfaßt:
(a) Waschen des Rohhämoglobins mit Wasser;
(b) Unterwerfen des Produkts des Schritts (a) einer Fest-Flüssig-Trennung;
(c) Dispergieren und Lösen der aus Schritt (b) resultierenden Feststoffe in Wasser unter alkalischen Bedingungen, die einen pH-Wert gleich oder höher als 9 aufweisen und
(d) Behandeln des Produkts des Schritts (c) mit Wasserstoffperoxid unter Erwärmen.

7. Verfahren nach Anspruch 6, das zusätzlich umfaßt:
(ec) Behandeln des Produkts des Schritts (d) mit Katalase.

8. Verfahren nach Anspruch 6, das zusätzlich umfaßt:
(ea) isoelektrisches Fällen des Produkts des Schritts (d)
(eb) Rückgewinnen und Waschen des Produkts des Schritts (ea) und
(ec) Behandeln des Produkts des Schritts (eb) mit Katalase.

9. Verfahren nach Anspruch 7 oder 8, das zusätzlich die Schritte umfaßt:
(f) Inaktivieren des Katalaseenzyms und gegebenenfalls
(g) Durchführen der isoelektrischen Fällung zur Reinigung des Hämoglobins und dann Trocknen des Hämoglobins.

## Revendications

1. Hémoglobine traitée présentant les caractéristiques suivantes :
(a) elle est désodorisée,
(b) elle est décolorée,
(c) elle est soluble dans l'eau et
(d) elle peut être obtenue par une technique comprenant les étapes suivantes :
(da) le lavage de l'hémoglobine avec de l'eau,
(db) la dispersion et la dissolution du produit de l'étape (da) dans de l'eau, dans des conditions alcalines avec une valeur de pH supérieure ou égale à 9, et
(dc) le traitement du produit de l'étape (db) par du peroxyde d'hydrogène en chauffant,
dans laquelle le produit de l'étape (dc) comprend une teneur en fer supérieure ou égale à 2 mg/g de teneur en matières solides, mesurée par absorptiométrie de o-phénanthroline, et dans laquelle la valeur de pH d'une solution aqueuse dudit produit de l'étape (dc) présentant une teneur en matières solides de 0,5% en masse est comprise entre 6,8 et 8,2.

2. Hémoglobine traitée selon la revendication 1, laquelle se trouve sous la forme d'une poudre.

3. Hémoglobine traitée selon la revendication 2, laquelle contient de la poudre de lait écrémé ou de lait entier à raison de 10 à 100% en masse par rapport à la protéine hémoglobine.

4. Hémoglobine traitée selon la revendication 1, laquelle se trouve sous la forme d'un liquide ayant de 10 à 25% en masse de teneur en protéine.

5. Hémoglobine traitée selon la revendication 4, laquelle contient de 10 à 20% en masse d'un glucide.

6. Procédé de production de l'hémoglobine traitée selon la revendication 1 comprenant les étapes suivantes consistant à :
(a) laver l'hémoglobine brute avec de l'eau,
(b) soumettre le produit de l'étape (a) à une séparation solide-liquide,
(c) disperser et dissoudre les matières solides provenant de l'étape (b) dans de l'eau, dans des conditions alcalines avec une valeur de pH supérieure ou égale à 9, et
(d) traiter le produit de l'étape (c) par du peroxyde d'hydrogène en chauffant.

7. Procédé selon la revendication 6, comprenant de plus l'étape consistant à
(ec) traiter le produit de l'étape (d) par de la catalase.

8. Procédé selon la revendication 6, comprenant de plus les étapes consistant à
(ea) précipiter isoélectriquement le produit de l'étape (d),
(eb) récupérer et laver le produit de l'étape (ea) et
(ec) traiter le produit de l'étape (eb) par de la catalase.

9. Procédé selon la revendication 7 ou 8, comprenant de plus les étapes consistant à
(f) inactiver l'enzyme catalase et, éventuellement,
(g) réaliser la précipitation isoélectrique pour purifier l'hémoglobine, puis sécher l'hémoglobine.
